# EUROPÄISCHE PATENTSCHRIFT

(11) **EP 3 672 893 B1**
(45) Veröffentlichungstag und Bekanntmachung des Hinweises auf die Patenterteilung: **06.10.2021**
(21) Anmeldenummer: 18759588.9
(22) Anmeldetag: 16.08.2018
(51) Int. Cl.: B65G 47/52, B65G 47/76, B65G 47/82

(54) **AUSLEITVORRICHTUNG MIT COANDA-STABILISIERUNGSEINRICHTUNG**
DIVERTING APPARATUS WITH COANDA STABILIZING DEVICE
DISPOSITIF D'ÉCARTEMENT POURVU DE DISPOSITIF DE STABILISATION À L'EFFET COAND

(30) Priorität: 25.08.2017 DE 102017008044
(43) Veröffentlichungstag der Anmeldung: 01.07.2020
(73) Patentinhaber: Heuft Systemtechnik GmbH, 56659 Burgbrohl (DE)
(72) Erfinder: HEUFT, Bernhard, 56659 Burgbrohl (DE)
(74) Vertreter: Gritschneder, Sebastian
(86) Internationale Anmeldenummer: PCT/EP2018/072233
(87) Internationale Veröffentlichungsnummer: WO 2019/038177

(56) Entgegenhaltungen:
- US-A- 4 369 873
- US-A- 5 135 101
- US-A- 5 810 516

## Beschreibung

Die vorliegende Anmeldung betrifft eine Vorrichtung zum Ausleiten von Objekten wie Behältern, Gebinden, Packstücken, die auf einer Transportvorrichtung befördert werden.

Solche Ausleitvorrichtungen werden z.B. zum Aussortieren von fehlerbehafteten Getränkeflaschen oder anderen leeren oder bereits gefüllten Lebensmittelbehältern oder Verpackungen eingesetzt. Die Transporteinrichtungen sind dabei Transportbänder, Gliederkettenförderer oder dergleichen, wobei zwei oder mehr solcher Transporteure zumindest abschnittsweise parallel nebeneinander laufen und die Ausleitvorrichtung die fehlerbehafteten Flaschen oder Behälter von einem ersten Transporteur auf einen der benachbarten Transporteure verschieben soll.

Aus der WO 00/68120 (EP 1 175 361 B1) ist es bekannt die Intensität, mit der Objekte ausgeleitet werden, so zu steuern, dass die Objekte einen unterschiedlich starken Ausleitimpuls quer zu ihrer Transportrichtung erhalten und dadurch auf eine von mehreren parallelen nebeneinander verlaufenden zweiten Transporteinrichtungen gelangen.

Aus der DE 10 2009 003 847 A1 ist es ebenfalls bekannt, die Intensität, mit der Objekte ausgeleitet werden so zu steuern, dass die Objekte einen unterschiedlich starken Ausleitimpuls quer zu ihrer Transportrichtung erhalten und dadurch auf eine zweite von mehreren nebeneinander verlaufenden Transporteinrichtungen gelangen. Die Transporteinrichtungen verlaufen dabei jeweils parallel zueinander. Die Stärke des Impulses wird entsprechend dem Gewicht oder dem Schwerpunkt der Objekte festgelegt und mittels eines Linearantriebs auf die Objekte übertragen.

Aus der DE-C2-36 23 327 ist eine Vorrichtung zum Aussortieren von fehlerhaften Verpackungseinheiten bekannt, wobei der Winkel automatisch gesteuert wird, unter dem ein Pusher die Verpackungseinheiten von dem Förderband schiebt. Der Winkel wird in Abhängigkeit von der Transportgeschwindigkeit des Förderbandes und dem dazu senkrechten Vektor der erforderlichen Schiebegeschwindigkeit eingestellt.

Aus der EP 0 019 117 A1 ist bekannt, dass Objekte mittels einer Vielzahl von Ausleitsegmenten von einer ersten auf eine zweite parallel verlaufende Transportbahn abgelenkt werden. Die einzelnen Ausleitsegmente bilden dabei eine durchgängige Ablenkfläche. Die Objekte bewegen sich nach Verlassen der Ausleiteinrichtung aufgrund ihrer Massenträgheit bis zur zweiten Transportbahn. Bei hohen Transportgeschwindigkeiten muss die Ablenkfläche nicht unbedingt durchgehend sein. In diesem Falle ist es ausreichend, wenn nur ein Teil der Ausleitsegmente eine Rampe bildet. Die transportierten Objekte bewegen sich dann aufgrund der Massenträgheit ohne Führung weiter auf die benachbarten Transportbahnen.

US 5 135 101 A offenbart den Oberbegriff der Ansprüche 1 und 9.

Insbesondere wenn die auszuleitenden Objekte relativ leicht sind, kann es bei den aus dem Stand der Technik bekannten Ausleitvorrichtungen vorkommen, dass die Objekte während der Ausleitung umkippen.

Aufgabe der vorliegenden Erfindung ist es daher, das Ausleitverfahren weiter zu verbessern und die Gefahr eines Umkippens der auszuleitenden Objekte weiter zu verringern.

Gelöst wird diese Aufgabe bei der Vorrichtung der eingangs genannten Art durch die Merkmale von Anspruch 1. Die Vorrichtung zum Ausleiten von Objekten, die auf einer Transportvorrichtung befördert werden, umfasst eine erste Transporteinrichtung, auf der die Objekte einreihig transportiert werden, eine zweite Transporteinrichtung, die neben der ersten Transporteinrichtung angeordnet ist, und eine Ausleiteinrichtung, die auszuleitende Objekte von der ersten Transporteinrichtung auf die zweite Transporteinrichtung verschiebt. Die Ausleiteinrichtung ist an einer Seite der Transportvorrichtung vorgesehen. Auf der der Ausleiteinrichtung gegenüberliegenden Seite der Transportvorrichtung ist ein Geländer vorgesehen zur Führung der auszuleitenden Objekte. Die Ausleiteinrichtung umfasst weiterhin eine Einrichtung zur Erzeugung eines Luftstrahls mit mindestens einer Strömungskomponente, die parallel zum Geländer verläuft und entlang der Innenseite des Geländers geblasen ist. Die Einrichtung zur Erzeugung eines Luttstrahls mindestens eine Düse aufweist, die an dem Geländer stromaufwärts der Ausleiteinrichtung vorgesehen ist.

In der vorliegenden Erfindung wird generell von einem "Luftstrahl" gesprochen. Natürlich kann der Strahl auch mit einem anderen gasförmigen Medium erstellt werden. Zum Beispiel können inerte Gase oder Schutzgase verwendet werden, wenn die zu transportierenden Objekte dies erfordern. Der Begriff "Luftstrahl" soll also nicht als limitiert auf "Luft" als gasförmiges Medium verstanden werden.

Objekte im Sinne der vorliegenden Erfindung können dabei Behälter wie Glasflaschen, Plastikflaschen, Container, Dosen, Gebinde oder andere Packstücke sein. Die vorliegende Erfindung eignet sich besonders zum Ausleiten von leichten Behältern wie leeren Kunststoffbehältern oder leeren Dosen, die aufgrund ihres geringen Gewichts beim Transport sehr leicht umkippen können.

Bei der vorliegenden Erfindung ist auf der der Ausleiteinrichtung gegenüber liegenden Seite entlang der ersten und zweiten Transporteinrichtung ein Geländer zur Führung der auszuleitenden Objekte vorgesehen. Dieses Geländer erstreckt sich dabei zunächst parallel entlang der ersten Transporteinrichtung. Im Bereich der Ausleiteinrichtung ist das Geländer kurvenförmig ausgeführt und folgt dem Transportweg der auszuleitenden Flaschen. Am Ende der Ausleitvorrichtung verläuft das Geländer dann seitlich der zweiten Transporteinrichtung. Das Geländer dient dabei der Führung und Stabilisierung der ausgeleiteten Flaschen.

Erfindungsgemäß ist weiterhin eine Einrichtung zur Erzeugung eines Luftstrahls, der parallel zum Geländer verläuft, vorgesehen. Dieser Luftstrahl stellt eine vorzugsweise lokal begrenzte Luftströmung dar, die entlang der durch das Geländer definierten Ebene verläuft.

Die Luftströmung bildet einerseits ein Luftpolster und dient dazu, harte Kollisionen der auszuleitenden Objekte mit dem Geländer abzufedern. Zum anderen übt die Luftströmung eine in Richtung des Geländers anziehende Kraft auf die auszuleitenden Objekte aus. Diese anziehende Kraft wird durch den Coanda-Effekt hervorgerufen. Der Coanda-Effekt tritt auf, wenn örtlich begrenzte Luftströmungen an Oberflächen vorbeigeführt werden.

Die auszuleitenden Objekte werden aufgrund des Coanda-Effekts also einerseits an das Geländer gedrückt, und andererseits sorgt der Luftstrom dafür, dass die Objekte keine harten Kollisionen mit dem Geländer erleiden. Insgesamt werden die Objekte daher nach dem Ausleitvorgang sicher am Führungsgeländer der zweiten Transporteinrichtung entlang geführt.

Da die durch den Coanda-Effekt hervorgerufene anziehende Kraft auf die auszuleitenden Objekte relativ klein ist, eignet sich die vorliegende Erfindung insbesondere zur Stabilisierung von relativ leichten Objekten wie leeren Flaschen oder Dosen.

Der Coanda-Effekt tritt bei lokal begrenzten Strömungen auf, die sich entlang einer Oberfläche erstrecken. Aus diesem Grund ist es vorteilhaft, wenn die Einrichtung zur Erzeugung der Luftströmung mindestens eine Düse aufweist. Mit dieser Düse kann der Strahl gezielt in der gewünschten Orientierung am Geländer der zweiten Transportvorrichtung entlang geführt werden.

Zur Erzeugung des Coanda-Effekts ist es notwendig, dass der Luftstrahl parallel zum Geländer verläuft. In einer Ausführungsform kann der Luftstrahl dabei parallel zum Geländer und in Transportrichtung entlang des Geländers verlaufen. Da in dieser Konfiguration der Luftstrahl dem Verlauf des Geländers folgt, ist in dieser Ausführungsform die Länge des wirksamen Bereichs relativ groß. Zu berücksichtigen ist allerdings, dass die auszuleitenden Objekte aufgrund des von hinten kommenden Luftstrahls zusätzlich beschleunigt werden können. Dies muss bei der Dimensionierung der Ausleiteinrichtung unter Umständen berücksichtigt werden. Dieser Effekt kann dabei auch vorteilhaft ausgenutzt werden, um ein Abbremsen der auszuleitenden Flaschen durch die Ausleiteinrichtung zu kompensieren.

Ein solcher Luftstrahl kann vorteilhaft durch Verwendung eines Geländers mit Hohlprofil erreicht werden. Zum Beispiel kann das Geländer die Form eines C-Profils haben, wobei auf der dem Transportbereich zugewandten Seite des Geländers eine durchgängige Öffnung oder Schlitz vorgesehen ist. Der Auslass der Einrichtung zur Erzeugung des Luftstrahls kann dabei im Inneren des Hohlprofils des Geländers angeordnet sein. Durch die Öffnung kann der Luftstrahl dann im Wesentlichen parallel zum Geländer und in Transportrichtung dem Verlauf des Geländers folgend austreten.

Diese Ausführungsform hat darüber hinaus den Vorteil, dass die Luftströmung nie vollends durch die auszuleitenden Objekte abgeschirmt werden kann. Unabhängig von der jeweiligen Ausleitaufgabe, kann bei dieser Ausführungsform eine vorbestimmte Länge des Einflussbereichs des Luftstrahls vorgesehen werden.

Durch die Positionierung der Düse kann bestimmt werden ab welcher Position entlang der Ausleitvorrichtung der Luftstrahl erzeugt wird und ab wann der Coanda-Effekt auftritt. Die stabilisierende Wirkung des Coanda-Effekts kann dadurch zum Beispiel auch bereits in Transportrichtung vor der Ausleiteinrichtung ausgenutzt werden.

Das Geländer kann grundsätzlich einen beliebigen geeigneten Querschnitt aufweisen. Insbesondere die Innenseite des Geländers, also die Seite an der die Objekte und der Luftstrahl entlang geführt werden, kann gerade, gekrümmt, konvex oder konkav ausgeführt sein.

Der Luftstrahl muss nicht notwendigerweise parallel zur Transportrichtung verlaufen. Der Coanda-Effekt wirkt sich auch aus, wenn der Luftstrahl zwar parallel zum Geländer, aber zum Beispiel von oben oder von unten unter einem Winkel am Geländer vorbeigeführt wird. Ganz allgemein kann der Luftstrahl unter einem beliebigen Winkel in der Geländerebene am Geländer vorbeigeführt werden.

Je größer der Winkel des Luftstrahls gegenüber der Transportebene ist, desto kürzer ist der Geländerbereich, der von dem Luftstrahl erfasst wird und in dem der Coanda-Effekt auf die auszuleitenden Objekte wirkt. Gleichzeitig verringert sich dabei aber auch die aufgrund des Luftstrahls bewirkte direkte Beschleunigung der Flaschen. Der Winkel unter dem der Luftstrahl in der Geländerebene an dem Geländer vorbeigeführt wird, kann je nach Ausleitaufgabe und je nach Anwendungsgebiet individuell optimal eingestellt werden.

Die Strömungsgeschwindigkeit, der Luftdruck, das Strahlprofil usw. können ebenfalls in Abhängigkeit der jeweiligen Ausleitaufgabe und je nach Anwendungsgebiet individuell eingestellt werden. Zur Generierung des Luftstrahls können handelsübliche Kompressoren oder Verdichter eingesetzt werden. Die Spezifikationen der eingesetzten Kompressoren können dabei an die jeweilige Ausleitaufgabe angepasst werden. Es hat sich gezeigt, dass für die Ausleitung von herkömmlichen leeren PET Behältern, Verdichter mit einer Nennleistung von zwischen 1 und 4 kW, vorzugsweise von etwa 1,5 kW, und einem Durchfluss von zwischen 40 und 100 m³/h, vorzugsweise etwa 65 m³/h, bei einem MaximalDruck von zwischen 200 und 600 mbar ausreichend sind. Um die Durchflussmenge zu begrenzen kann zum Beispiel zusätzlich ein Frequenzumrichter eingesetzt werden, so dass der Verdichter nicht ausschließlich bei der üblichen Netzfrequenz von 50 Hz, sondern auch bei beliebigen kleineren Frequenzen betrieben werden kann.

Der Begriff "Transporteinrichtungen" wie er hierin verwendet wird, umfasst jegliche Art von typischerweise beim Transport von den oben angegebenen Objekten verwendeten

Transporteuren. Flaschen oder Dosen werden vorzugsweise auf Gliederkettenförderern oder Transportbändern transportiert, die über Umlenkrollen motorisch angetrieben werden und sowohl geradlinig als auch kurvengängig ausgeführt sein können. Die vorliegende Erfindung ist aber nicht auf die Verwendung bei Gliederkettenförderern oder Bändern beschränkt.

Die Transporteinrichtungen können jeweils geradlinig ausgeführt sein und entweder parallel oder unter einem bestimmten Winkel zueinander angeordnet sein. Geradlinige Transportvorrichtungen sind einfacher in der Handhabung und unterliegen einem geringeren Verschleiß.

Der Winkel zwischen der ersten und der zweiten Transportvorrichtung ist dabei prinzipiell beliebig wählbar. Vorzugsweise beträgt der Winkel zwischen der ersten und zweiten Transporteinrichtung zwischen 0° und 90°, weiter vorzugsweise zwischen 30° und 60°und besonders bevorzugt etwa 45°. Die Wahl des Winkels hängt unter anderem auch von der Geschwindigkeit ab, mit der die Objekte auf der ersten Transporteinrichtung gefördert werden. Bei sehr niedrigen Geschwindigkeiten der ersten Transporteinrichtung kann der Winkel, unter dem die zweite Transporteinrichtung angeordnet ist, sehr groß, z.B. über 80° werden. Bei sehr hohen Geschwindigkeiten muss der Winkel dagegen kleiner gewählt werden.

Grundsätzlich ist es auch möglich, dass der Winkel zwischen der ersten und zweiten Transporteinrichtung einstellbar ist. Hierzu kann zum Beispiel die zweite Transporteinrichtung beweglich ausgeführt sein und über einen Stellmechanismus angesteuert werden. Wenn der Winkel zwischen den Transporteinrichtungen einstellbar ist, kann die Ausleitvorrichtung flexibel an unterschiedliche zu transportierende Objekte angepasst werden.

Bei bestimmten Ausführungsformen der Erfindung können die erste und die zweite Transporteinrichtung im Bereich der Ausleiteinrichtung übereinander angeordnet sein. Dies ist insbesondere bei geradlinig verlaufenden zweiten Transporteinrichtungen sinnvoll. Durch diese gestapelte Anordnung kann eine durchgängige Transportfläche gewährleistet werden, ohne dass unbewegte Übergangselemente zwischen den Transporteinrichtungen nötig sind. Solche Übergangselemente würden zu unerwünschten Reibungseffekten führen und könnten die Ausleitung negativ beeinflussen.

Die Transportfläche der ersten bzw. oberen Transporteinrichtung kann dabei relativ dünnwandig ausgeführt sein und etwa nur 0,2 mm betragen, so dass nur eine geringe Stufe von den auszuleitenden Objekten bei dem Übergang von der ersten auf die zweite Transporteinrichtung bewältigt werden muss. Dies ist üblicherweise möglich, ohne dass die Objekte dabei umkippen.

Vorzugsweise kann die oberhalb angeordnete Transporteinrichtung in Transportrichtung asymmetrisch ausgeführt sein, so dass die Transportfläche der ersten Transporteinrichtung in Richtung der zweiten Transporteinrichtung verlängert ist, und somit eine größere Überlappungsfläche zwischen den beiden Transporteinrichtungen gegeben ist.

Die zweite Transporteinrichtung kann auch einen nicht-geradlinigen oder kurvenförmigen Verlauf haben. Vorzugsweise verläuft die zweite Transporteinrichtung in Förderrichtung stromaufwärts der Ausleiteinrichtung im Wesentlichen parallel zur ersten Transporteinrichtung, nimmt dann im Bereich der Ausleitvorrichtung einen kurvenförmigen Verlauf, und geht dann wiederum in einen geradlinigen Bereich über, der dann den Winkel zwischen den beiden Transporteinrichtungen definiert. Auch eine nicht-geradlinig angeordnete zweite Transporteinrichtung kann unterhalb der ersten Transporteinrichtung angeordnet sein. Grundsätzlich kann auch oder nur die erste Transporteinrichtung einen nicht-geradlinigen Verlauf haben.

Wenn die zweite Transporteinrichtung einen kurvenförmigen oder konvexen Verlauf aufweist, ist auch das Führungsgeländer im Bereich der zweiten Transporteinrichtung entsprechend konvex geformt. Der Effekt der vorliegenden Erfindung kann dadurch aber trotzdem erzielt werden. Aufgrund des Coanda-Effekts folgt nämlich der Luftstrahl dem Geländerverlauf. Dieses Verhalten des Luftstrahls ist insbesondere dann vorteilhaft, wenn der Luftstrahl im Wesentlichen in Transportrichtung parallel zum Geländer geführt wird, da dann auch bei kurvenförmigem Verlauf der zweiten Transportrichtung der Luftstrahl dem Verlauf des Führungsgeländers folgt. Aber auch wenn der Luftstrahl unter einem Winkel gegenüber der Transportebene ausgerichtet ist, kann dieser Effekt ausgenutzt werden. Bei solchen Ausführungsformen kann der Strahl zum Beispiel von oben kommend an einer konvex geformten Innenseite des Geländers vorbeigeführt werden, um dann an der Unterseite des Geländers mit einer nach außen gerichteten Strömungskomponente die Ausleitvorrichtung zu verlassen, ohne dass es zu störenden Verwirbelungen kommt, die die Stabilität der auszuleitenden Objekte beinträchtigen könnte.

Das Ausleitelement kann grundsätzlich ein beliebiges, dem Fachmann bekanntes Ausleitelement sein. Bevorzugterweise kann das Ausleitelement ein steuerbarer Pusher oder Schieber sein, der zum Beispiel über einen positionsgesteuerten Linearmotor angetrieben wird. Solche Linearmotoren eignen sich besonders, da sie mit hoher Geschwindigkeit und hoher Präzision angesteuert werden und hohe Stellkräfte erzeugen können.

Wenn ein Pusher als Ausleiteinrichtung verwendet wird, dann wird dieser bevorzugt so eingestellt, dass die Objekte geführt ausgeleitet werden, dass also der Pusher und das auszuleitende Objekt über eine möglichst lange Zeit in direktem Kontakt zueinander sind. Je länger ein Objekt geführt wird, desto geringer ist die Wahrscheinlichkeit, dass das Objekt während des Ausleitens kippt. Am Ende des Ausleitvorgangs, also wenn das auszuleitende Objekt sich gerade auf der zweiten Transporteinrichtung befindet, bewegt sich dieses dann idealerweise bereits in Richtung und mit der Geschwindigkeit der zweiten Transporteinrichtung, so dass es in dieser Phase zu keiner Relativbewegung zwischen der Transporteinrichtung und dem Objekt kommt. Dadurch wird die Verkippsicherheit der Ausleitvorrichtung wesentlich erhöht.

Ein Pusher kann senkrecht oder in beliebigem Winkel relativ zur ersten Transporteinrichtung angeordnet sein. Vorzugsweise ist die Stellkraft des Pushers so groß, dass auszuleitende Objekte unabhängig von ihrem Gewicht und der Reibung auf den Transporteinrichtungen immer mit derselben Geschwindigkeitskomponente senkrecht zur Transportrichtung der ersten Transporteinrichtung beaufschlagt werden.

Die Ausleiteinrichtung kann auch eine Reihe von Ausleitsegmenten umfassen, wobei die einzelnen Ausleitsegmente einzeln oder gemeinsam ansteuerbar sind und zusammen eine kontinuierliche Ablenkfläche bilden. Der Vorteil einer solchen Ausleitvorrichtung ist, dass die Richtung der Ausleitung durch die Ablenkfläche fest vorgegeben ist, und somit unabhängig von der Transportgeschwindigkeit der ersten Transporteinrichtung ist. Darüber hinaus werden die Objekte zu jedem Zeitpunkt an einem Geländer geführt, so dass dies wiederum zur Erhöhung der Stabilität des Ausleitprozesses beiträgt.

Ausleitvorrichtungen, die aus einzelnen Ausleitsegmenten bestehen sind im Stand der Technik hinlänglich bekannt und stellvertretend wird an dieser Stelle auf die Ausführungen in der EP-A1-0 019 117 derselben Anmelderin verwiesen.

Bevorzugter Weise ist die Ausleiteinrichtung auf der einen Seite der Transporteinrichtung angebracht. Die zweite Transporteinrichtung, auf die die auszuleitenden Objekte verschoben werden, ist dann auf der gegenüberliegenden Seite der ersten Transporteinrichtung angebracht. Das Führungsgeländer, an dem sich der Luftstrahl erstreckt ist, auf der der Ausleiteinrichtung gegenüberliegenden Seite der jeweiligen Transporteinrichtung. Das Führungsgeländer erstreckt sich dabei zunächst parallel entlang der ersten Transporteinrichtung und folgt dann dem kurvenförmigen Verlauf des Transportwegs der auszuleitenden Flaschen. Am Ende der Ausleitvorrichtung verläuft das Geländer dann seitlich der zweiten Transporteinrichtung.

In einer weiteren Ausführungsform kann die erste Transporteinrichtung mindestens nach der Ausleiteinrichtung ebenfalls einen kurvenförmigen Verlauf haben. Vorzugsweise weist die erste Transporteinrichtung dabei einen Kurvenverlauf mit einer entgegengesetzten Krümmung im Vergleich zur zweiten Transporteinrichtung auf. Um die Objekte dabei auf der ersten Transporteinrichtung zu halten, kann eine weitere Ausleiteinrichtung vorgesehen sein. Zudem kann eine weitere Einrichtung zur Erzeugung eines Luftstrahls mit mindestens einer Strömungskomponente, die parallel zu einem der ersten Transporteinrichtung zugeordneten Geländer verläuft. Die Bau- und Funktionsweise dieser weiteren Einrichtung zur Erzeugung eines Luftstrahls kann identisch sein zur oben beschriebenen Einrichtung. Die weitere Einrichtung zur Erzeugung eines Luftstrahls dient dann dazu, die auf der ersten Transporteinrichtung verbleibenden Behälter während des Transports zu stabilisieren. Wenn der Krümmungsradius der ersten Transporteinrichtung groß genug ist, dann kann sogar auf eine zweite Ausleiteinrichtung verzichtet werden. Alleine der Coanda-Effekt ist dann nämlich ausreichend, die Behälter an das Geländer der ersten Transporteinrichtung zu drücken, so dass die Behälter dabei sogar dem kurvenförmigen Verlauf dieses Geländers folgen können, ohne hierbei zusätzlich eine Richtungsänderung von einer zusätzlichen Ausleiteinrichtung zu benötigen. Der Grenzradius, also der Radius bis zu dem die Behälter noch alleine aufgrund des Coanda-Effekts ausgeleitet werden können ist dabei abhängig von den Parametern der Ausleitung, insbesondere der Transportgeschwindigkeit, der Behälterform, dem Behältergewicht sowie der Stärke der Luftströmung und dem Strömungsprofil. Der Fachmann muss diese Parameter daher bei der Auslegung der Ausleiteinrichtung berücksichtigen. Diese Ausführungsform kann insbesondere bei hohen Behältergeschwindigkeiten und kleinen Ausleitwinkel vorteilhaft eingesetzt werden.

Bei Transporteinrichtungen, die mit sehr hohen Geschwindigkeiten von über 80.000 Flaschen pro Stunde betrieben werden, kann es ausreichend sein, dass nur ein Teil der Ausleitsegmente verwendet wird, um eine Rampe zu bilden, die den auszuleitenden Objekten den benötigten Querimpuls vermitteln. Die Objekte bewegen sich dann aufgrund ihrer Massenträgheit ungeführt von der ersten Transporteinrichtung herunter und gelangen dann mit der gewünschten Geschwindigkeit und Bewegungsrichtung auf die zweite Transporteinrichtung. Der kurze ungeführte Bewegungsabschnitt beeinträchtigt in diesem Fall den Ausleitvorgang kaum.

Um den Ausleitvorgang zu optimieren, können über stromaufwärts der Ausleitvorrichtung installierte Inspektionseinrichtungen zusätzliche Daten zu den auszuleitenden Objekten bestimmt werden. Auf diese Weise können zum Beispiel Parameter wie Gewicht, Geschwindigkeit, Material, Reibung oder Inhalt eines auszuleitenden Objekts bestimmt werden. Diese Informationen sind zwar grundsätzlich nicht notwendig, können aber verwendet werden, um den Ausleitvorgang noch gezielter zu steuern.

Die vorliegende Erfindung betrifft auch ein Verfahren zum Ausleiten von Objekten, wobei die Objekte auf einer ersten Transporteinrichtung einreihig transportiert werden, wobei die auszuzuleitenden Objekte von einer Ausleiteinrichtung von der ersten Transporteinrichtung auf eine zweite Transporteinrichtung ausgeleitet werden. Auf der der Ausleiteinrichtung gegenüberliegenden Seite ist ein Geländer vorgesehen zur Führung der auszuleitenden Objekte. Mittels einer Einrichtung zur Erzeugung eines Luftstrahls wird ein Luftstrahls erzeugt, der parallel zu diesem Geländer verläuft, und wobei die Einrichtung zur Erzeugung eines Luftstrahls mindestens eine Düse aufweist, die an dem Geländer stromaufwärts der Ausleiteinrichtung vorgesehen ist.

Ein weiterer Vorteil der vorliegenden Erfindung liegt darin, dass Vorrichtungen, bei denen ausgeleitete Objekte zudem noch unter einer geänderten Richtung weiter gefördert werden, mit Hilfe der vorliegenden Erfindung kompakter gebaut werden können. Bei herkömmlichen Transportsystemen musste hierfür bisher ein zweistufiges Verfahren eingesetzt werden. Zunächst werden die auszuleitenden Objekte auf eine parallel-laufende Bahn ausgeleitet. Anschließend können diese ausgeleiteten Objekte über einen Kurventransporteur oder dergleichen auf die gewünschte Transportrichtung gebracht werden. Aufgrund dieses sequentiellen Verfahrens tritt bei derartigen herkömmlichen Systemen ein relativ hoher Platzbedarf auf. Die vorliegende Erfindung erlaubt es dagegen, auf kürzerem Transportweg sowohl eine Ausleitung als auch eine Richtungsänderung der auszuleitenden Objekte herbeizuführen.

Ausführungsbeispiele der Erfindung werden nachfolgend anhand der Zeichnung erläutert. Es zeigen:
Fig. 1 Aufsicht einer Ausleitvorrichtung mit einer geradlinigen ersten Transporteinrichtung und einer kurvenförmigen zweiten Transporteinrichtung;
Fig. 2 Querschnitt der zweiten Transporteinrichtung im Ausleitungsbereich;
Fig. 3 Querschnitte verschiedener Geländerprofile;
Fig. 4 Aufsicht einer weiteren Ausleitvorrichtung, wobei sich der Luftstrahl unter einem Winkel gegenüber der Transportebene erstreckt;
Fig. 5 Seitenansicht der Ausleitvorrichtung mit Geländer und schräg verlaufendem Luftstrahl gemäß Fig. 4,
Fig. 6 Querschnitt der zweiten Transporteinrichtung gemäß Fig. 4 im Ausleitungsbereich,
Fig. 7 Aufsicht einer Ausleitvorrichtung mit einer geradlinigen ersten Transporteinrichtung und einer parallel dazu verlaufenden zweiten Transporteinrichtung, und Fig. 8 Ausleitvorrichtung gemäß Fig. 7 mit Pusher als Ausleiteinrichtung;

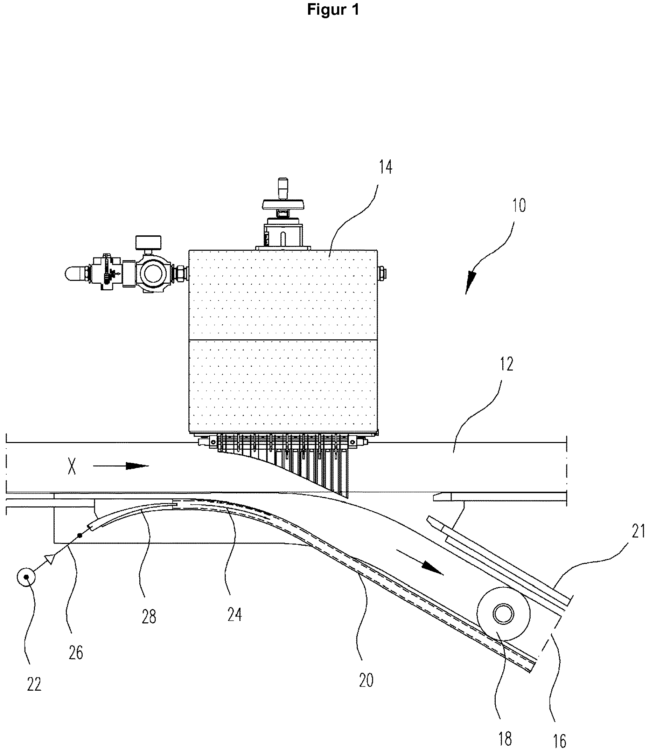

Fig. 1 zeigt ein Ausleitvorrichtung gemäß der vorliegenden Erfindung. Die Ausleitvorrichtung bildet eine Ausleitweiche 10 für leere Kunststoffflaschen. Die Ausleitweiche 10 umfasst eine erste geradlinig verlaufende Transporteinrichtung 12, auf der Flaschen 18 in Richtung des Pfeils X transportiert werden. Mittels einer Ausleiteinrichtung 14 werden die Flaschen 18 von der ersten Transporteinrichtung 12 auf eine zweite Transporteinrichtung 16 verschoben. Die zweite Transporteinrichtung 16 verläuft in einem stromaufwärts der Ausleiteinrichtung 14 gelegenen Abschnitt parallel zur ersten Transporteinrichtung 12, und zweigt in einem stromabwärts der Ausleiteinrichtung 14 gelegenen Abschnitt unter einem Winkel α von 30° von der ersten Transporteinrichtung 12 ab.

Die Ausleiteinrichtung 14 ist seitlich an der ersten Transporteinrichtung 12 vorgesehen und zwar an der der zweiten Transporteinrichtung 16 gegenüberliegenden Seite. In der in Figur 1 abgebildeten Ausführungsform besteht die Ausleiteinrichtung 14 aus einer Vielzahl von Einzelsegmenten 14a, die zusammen eine kontinuierliche Ablenkfläche bilden.

Gegenüber der Ausleiteinrichtung ist ein abschnittsweise kurvenförmiges Geländer 20 vorgesehen, das entlang des Transportwegs der auszuleitenden Flaschen 18 durch die Ausleitvorrichtung verläuft. Dieses Geländer 20 erstreckt sich dabei zunächst parallel entlang der ersten Transporteinrichtung 12. Im Bereich der Ausleiteinrichtung 14 ist das Geländer 20 kurvenförmig ausgeführt und folgt dem Transportweg der auszuleitenden Flaschen 18. Am Ende der Ausleitvorrichtung verläuft das Geländer 20 dann seitlich der zweiten Transporteinrichtung 16. Das Geländer 20 dient der Führung und Stabilisierung der ausgeleiteten Flaschen 18.

Die Ausleitweiche 10 umfasst ferner einen Druckluftgenerator 22 zur Erzeugung eines Luftstrahls 24, der entlang des Geländers 20 verläuft. In der Ausführungsform gemäß Figur 1 wird hierzu Umgebungsluft über einen Druckluftschlauch 26 und eine entsprechend angeordnete Düse 28 in Transportrichtung entlang der Innenseite des Geländers 20 geblasen.

Aufgrund des Coanda-Effekts folgt der Luftstrahl 24 dabei jederzeit dem konvexen Verlauf des Geländers 20. Dies bedeutet, dass der Luftstrahl 24 auch dann weiter entlang der Oberfläche des Geländers 20 verläuft, wenn das Geländer 20 eine Kurve beschreibt und dem Transportweg der auszuleitenden Flaschen 18 durch die Ausleitvorrichtung folgt. Der Luftstrahl 24 verläuft also ausgehend von der Düse 28 nicht geradlinig, sondern folgt dem gebogenen Verlauf des Geländers 20.

Der Luftstrahl wirkt dabei stabilisierend auf die ausgeleiteten Flaschen 18. Zum einen bildet der Luftstrahl 24 ein Luftpolster zwischen den Flaschen 18 und dem Geländer 20 und dämpft damit eventuelle Kollisionen der Flaschen 18 mit dem Geländer 20 ab. Zum anderen bewirkt der Luftstrahl 24 aufgrund des Coanda-Effekts, dass die Flaschen 18 gleichzeitig eine anziehende Kraft in Richtung des Geländers 20 erfahren. Diese anziehende Kraft und das durch den Luftstrahl 24 erzeugte Luftpolster sorgen dafür, dass die Flaschen 18 sicher entlang des Geländers 20 geführt werden. Ein Verkippen der Flaschen 18 beim Ausleitvorgang wird dadurch weitgehend vermieden.

Die Düse 28 ist an dem Geländer 20 stromaufwärts der Ausleiteinrichtung 14 vorgesehen. Dadurch kommen die Flaschen 18 bereits vor der Ausleiteinrichtung mit dem Luftstrahl 24 in Kontakt. Dadurch kann eine Stabilisierung der Flaschen 18 während des gesamten Ausleitvorgangs erreicht werden.

In der in Figur 1 dargestellten Ausführungsform, ist das Geländer 20 zur Führung des Luftstroms 24 als Hohlprofil ausgebildet, das zum Transportbereich eine durchgängige Öffnung aufweist.

Zur Erzeugung des Luftstrahls 24 kann in dieser Ausführungsform die Düse 28 der Druckluftleitung 26 im Inneren des Hohlprofils des Geländers 20 münden. Der Luftstrahl 24 verläuft dann im Inneren des Profils entlang des Geländers 20 und erstreckt sich durch die durchgängige Öffnung 30 auch außerhalb des Profils parallel zum Geländer 24. Dort strömt der Luftstrahl 24 dann auch an den Flaschen 18 vorbei und erzeugt dabei den oben beschriebenen stabilisierenden Effekt auf die Flaschen 18. Diese Ausführungsform hat den Vorteil, dass der Luftstrahl 24 nie vollends von den Flaschen 18 abgeschirmt werden kann. Wenn mehrere Flaschen 18 direkt hintereinander ausgeleitet werden, wirkt sich der Luftstrahl 24 damit auf alle vorangehenden und bereits ausgeleiteten Flaschen 18 aus.

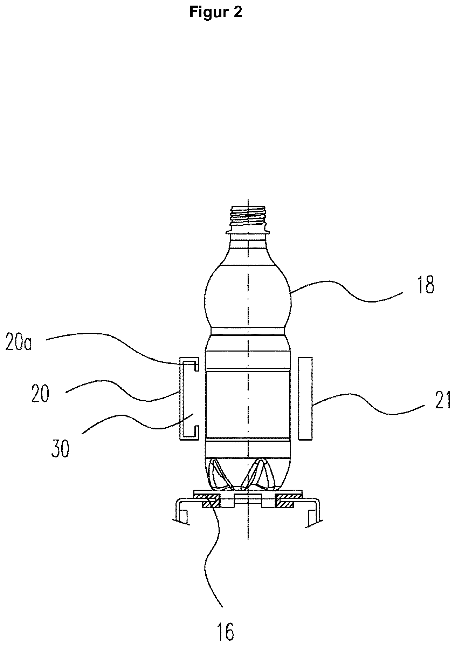

In Fig. 2 ist ein Querschnitt des Ausleitungsbereich der Fig. 1 abgebildet. Die ausgeleitete Flasche 18 wird auf der zweiten Transporteinrichtung 16 zwischen dem Geländer 20 und einem gegenüberliegenden Geländer 20a geführt. Das Geländer 20 ist durch ein Hohlprofil, genauer, durch ein C-Profil gebildet. Das C-Profil hat einen durchgängigen Schlitz bzw. eine durchgängige Öffnung 30 auf der dem Transportbereich zugewandten Seite 20a des Geländers 20. Das in Fig. 2 abgebildete Geländer hat eine Größe von etwa 5 cm x 1 cm. Der durchgängige Schlitz hat eine Breite von etwa 4 cm.

Zur Erzeugung des Luftstrahls kann ein handelsüblicher Verdichter verwendet werden. Zum Beispiel kann dies ein Verdichter mit einer Leistung von 1,5 kW mit einer Blasluftmenge von 70 m³/h bei 400 mbar sein.

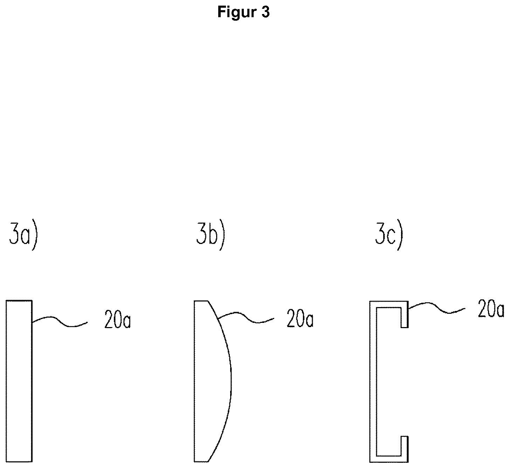

Das Geländer 20 kann auch andere Profile aufweisen. Alternative Geländerprofile sind in Fig. 3 abgebildet. Neben dem bereits beschriebenen Hohlprofil, wie es in Fig. 3c abgebildet ist, kann auch ein Geländer mit rechteckigem Profil gemäß Fig. 3a oder ein abgerundetes Profil gemäß Fig. 3b verwendet werden.

In den in Figuren 1 und 2 dargestellten Ausführungsformen verläuft der Luftstrahl 24 im Wesentlichen in Transportrichtung und parallel an der Innenseite des Geländers 20 entlang. Der stabilisierende Effekt kann aber auch mit einem Luftstrahl 24 erzielt werden, der zwar im Wesentlichen parallel zur Geländerebene, aber unter einem vordefinierten Winkel β bezüglich der Transportebene verläuft.

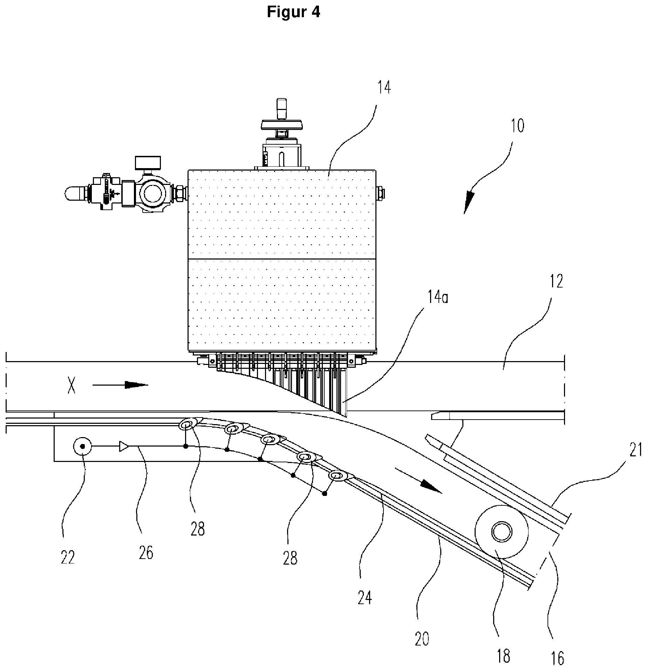

Eine solche Ausführungsform ist in den Figs. 4 bis 6 dargestellt. In Fig. 4 ist ebenfalls eine Ausleitweiche 10 abgebildet, bei der die zweite Transporteinrichtung 16 eine Kurve beschreibt, und unter einem Winkel von 30° gegenüber der ersten Transporteinrichtung 12 abzweigt. Die Ausleiteinrichtung besteht wieder aus einer Vielzahl von Einzelsegmenten 14a, die zusammen eine kontinuierliche Ablenkfläche bilden.

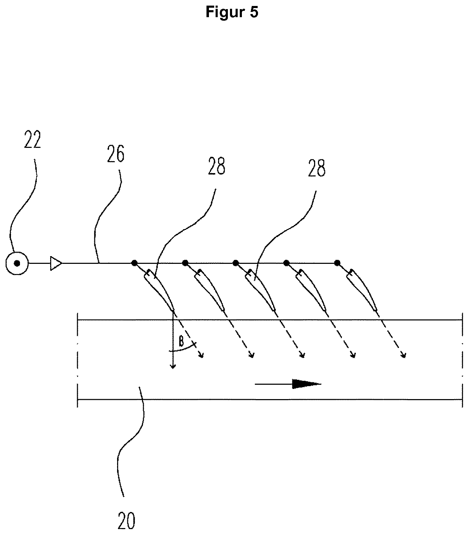

Der stabilisierende Luftstrahl 24 wird mittels mehrerer Düsen 28 erzeugt. Wie in Fig. 5 dargestellt sind die Düsen 28 oberhalb des Geländers 20 unter einem Winkel von etwa 40° in Bezug auf die Transportebene angeordnet. In dieser Ausführungsform werden die Luftstrahlen 24 ebenfalls an der Innenseite des Geländers 20 zwischen den Flaschen 18 und dem Geländer 20 hindurchgeführt. Der Luftstrahl 24 tritt dabei zwar nur in einem relativ kurzen Bereich in Wechselwirkung mit den Flaschen 18. Durch Anordnung von mehreren voneinander beabstandeten Düsen 28 kann dieser Bereich aber je nach Bedarf verlängert werden.

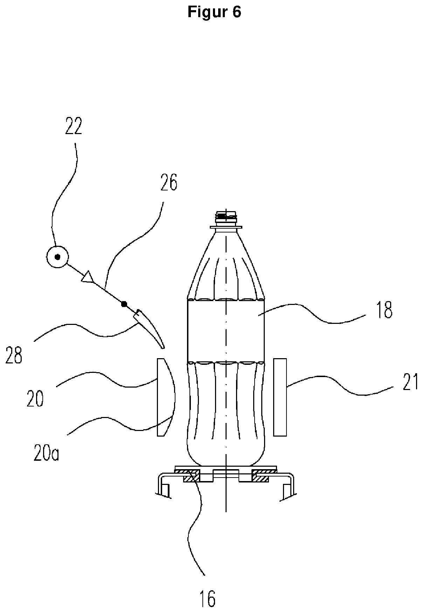

Das Geländerprofil ist in diesem Fall, wie in Fig. 6 dargestellt, auf der Innenseite 20a abgerundet, wobei die Luftstrahlen 24 wieder aufgrund des Coanda-Effektes der Krümmung der Innenseite 20a des Geländers 20 folgen.

Da in dieser Ausführungsform die in Transportrichtung verlaufende Komponente des Luftstrahls 24 geringer ist, ist die durch den Luftstrahl 24 verursachte Beschleunigung der Flaschen ebenfalls deutlich verringert.

Bei der Realisierung der erfindungsgemäßen Ausleitvorrichtung können die Winkel α, β und die Geschwindigkeit des Luftstrahls 24 an die jeweilige Transportaufgabe angepasst und in Abhängigkeit der verwendeten Transporteinrichtungen 12, 16 und der Eigenschaften der auszuleitenden Flaschen 18 eingestellt werden.

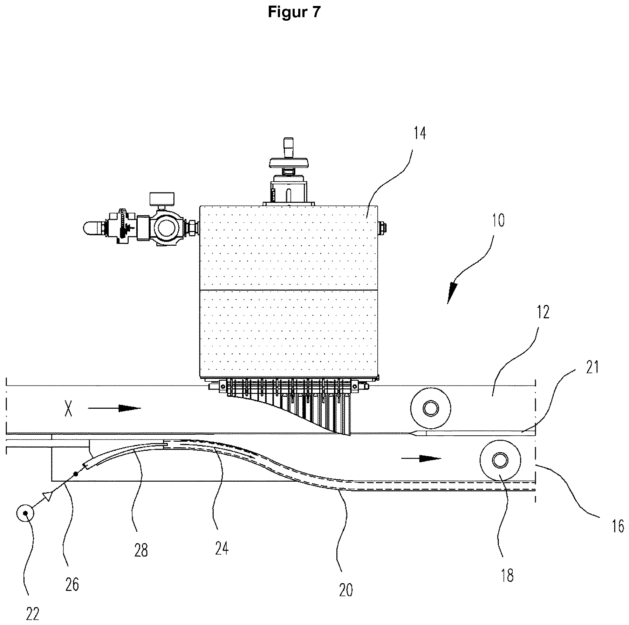

In Fig. 7 ist ein weitere Ausführungsform der erfindungsgemäßen Ausleitvorrichtung 10 abgebildet. Diese Vorrichtung entspricht im Wesentlichen der Vorrichtung, wie sie in Fig. 1 abgebildet ist. Allerdings werden in Fig. 7 die auszuleitenden Flaschen 18 auf eine zweite Transporteinrichtung 16 geschoben, die parallel zur ersten Transporteinrichtung 12 verläuft. Auch in diesem Fall kann die stabilisierende Wirkung des Luftstrahls 24 vorteilhaft ausgenutzt werden, da der Luftstrahl 24 auch in diesem Fall der Krümmung des seitlichen Geländers 20 folgt.

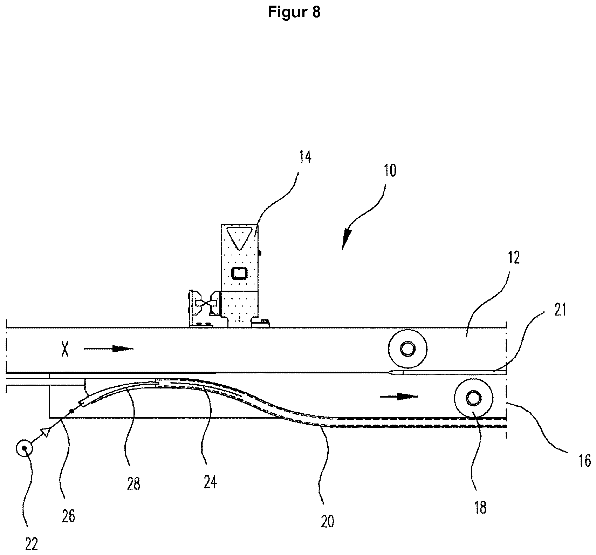

Die in Fig. 8 dargestellte Ausführungsform entspricht im Wesentlichen der Vorrichtung, wie sie in Fig. 7 abgebildet ist. Wiederum werden die auszuleitenden Flaschen 18 auf eine zweite Transporteinrichtung 16 geschoben, die parallel zur ersten Transporteinrichtung 12 verläuft. In Fig. 7 wird die Ausleiteinrichtung 14 jedoch von einem Pusher gebildet, der einen positionsgeregelten Linearantrieb umfasst. Mit dem Pusher werden auszuleitende Flaschen 18 von der ersten Transporteinrichtung 12 auf die zweite Transporteinrichtung 16 verschoben.

### Liste der Bezugszeichen

| | | | |
|---|---|---|---|
| 10 | Ausleitweiche | 21 | Geländer |
| 12 | erste Transporteinrichtung | 22 | Druckluftgenerator |
| 14 | Ausleiteinrichtung | 24 | Luftstrahl |
| 14a | Ausleitsegmente | 26 | Druckluftschlauch |
| 16 | zweite Transporteinrichtung | 28 | Düse |
| 18 | Flaschen | 30 | Geländeröffnung |
| 20 | Geländer | | |
| 20a | Geländerinnenseite | | |

## Patentansprüche

1. Vorrichtung zum Ausleiten von Objekten (18) wie Behältern, Gebinden, Packstücken, die auf einer Transportvorrichtung befördert werden,
mit einer ersten Transporteinrichtung (12), auf der die Objekte (18) einreihig transportiert werden,
mit einer zweiten Transporteinrichtung (16), die seitlich der ersten Transporteinrichtung (12) angeordnet ist,
mit einer Ausleiteinrichtung (14), die an einer Seite der Transportvorrichtung vorgesehen ist und mit der ein auszuleitendes Objekt (18) von der ersten Transporteinrichtung (12) auf die zweite Transporteinrichtung (16) ausgeleitet wird, und
mit einem Geländer (20), das an einer der Ausleiteinrichtung gegenüber liegenden Seite der Transportvorrichtung vorgesehen ist,
**gekennzeichnet durch**
eine Einrichtung zur Erzeugung eines Luftstrahls (24), wobei die Einrichtung zur Erzeugung des Luftstrahls so konfiguriert ist, dass der erzeugte Luftstrahl (24) parallel zum Geländer (20) verläuft und entlang der Innenseite des Geländers (20) geblasen ist, und
wobei die Einrichtung zur Erzeugung eines Luftstrahls (24) mindestens eine Düse (28) aufweist, die an dem Geländer (20) stromaufwärts der Ausleiteinrichtung (14) vorgesehen ist.

2. Vorrichtung nach Anspruch 1, wobei die Luftströmung auf die auszuleitenden Objekte (18) eine Kraft in Richtung des Geländers (20) bewirkt.

3. Vorrichtung nach einem der vorhergehenden Ansprüche, wobei der Luftstrahl von einem Druckluftgenerator (22) erzeugt wird und über eine Druckluftleitung (26) mit der Düse (28) parallel zum Geländer (20) ausgerichtet ist.

4. Vorrichtung nach einem der vorhergehenden Ansprüche, wobei der Luftstrahl parallel zum Geländer (20) und in Transportrichtung der Objekte (18) verläuft.

5. Vorrichtung nach einem der vorhergehenden Ansprüche, wobei das Geländer (20) ein Hohlprofil aufweist, durch das der Luftstrahl (24) geleitet wird, und wobei das Geländer (20) mindestens eine Öffnung (30) aufweist, durch die der Luftstrahl (24) im Wesentlichen parallel zum Geländer (24) austritt.

6. Vorrichtung nach einem der vorhergehenden Ansprüche, wobei der Luftstrahl (24) parallel zum Geländer (20) und unter einem vorbestimmten Winkel (β) gegenüber der durch die Transporteinrichtungen (12, 16) definierten Transportebene verläuft.

7. Vorrichtung nach einem der Ansprüche 1 bis 5, wobei die zweite Transporteinrichtung (16) in Förderrichtung stromaufwärts im Wesentlichen parallel zur ersten Transporteinrichtung (12) verläuft und im Bereich der Ausleitvorrichtung (14) unter einem gegebenenfalls einstellbaren Winkel (α) von der ersten Transporteinrichtung (12) abweicht.

8. Vorrichtung nach einem der vorangehenden Ansprüche, wobei die Ausleiteinrichtung (14) eine Reihe von Ausleitsegmenten (14a) umfasst, und wobei die einzelnen Ausleitsegmente (14a) zusammen eine kontinuierliche Ablenkfläche bilden.

9. Verfahren zum Ausleiten von Objekten (18) wie Behältern, Gebinden, Packstücken, die auf einer Transportvorrichtung befördert werden,
mit einer ersten Transporteinrichtung (12), auf der die Objekte (18) einreihig transportiert werden,
einer zweiten Transporteinrichtung (16), die seitlich der ersten Transporteinrichtung (12) angeordnet ist,
mit einer Ausleiteinrichtung (14), die an einer Seite der Transportvorrichtung vorgesehen ist und mit der ein auszuleitendes Objekt (18) von der ersten Transporteinrichtung (12) auf die zweite Transporteinrichtung (16) ausgeleitet wird,
mit einem Geländer (20), das an der der Ausleiteinrichtung gegenüber liegenden Seite der Transportvorrichtung vorgesehen ist,
**dadurch gekennzeichnet, dass**
eine Einrichtung zur Erzeugung eines Luftstrahls (24) vorgesehen ist, wobei die Einrichtung zur Erzeugung des Luftstrahls so konfiguriert ist, dass der erzeugte Luftstrahl (24) parallel zum Geländer (20) verläuft und entlang der Innenseite des Geländers (20) geblasen ist, und
wobei die Einrichtung zur Erzeugung eines Luftstrahls (24) mindestens eine Düse (28) aufweist, die an dem Geländer (20) stromaufwärts der Ausleiteinrichtung (14) vorgesehen ist.

## Claims

1. Apparatus for diverting objects (18), such as containers, bundles, packages, which are conveyed on a transport device,
with a first transport device (12), on which the objects (18) are transported in a single row,
with a second transport device (16), which is arranged laterally of the first transport device (12),
with a diverting device (14) which is provided on one side of the transport device and by means of which an object (18) to be diverted is diverted from the first transport device (12) onto the second transport device (16), and
with a railing (20) which is provided on a side of the transport device opposite the diverting device,
**characterised by**
a device for generating an air jet (24), wherein the device for generating the air jet is configured such that the generated air jet (24) is parallel to the railing (20) and is blown along the inner side of the railing (20), and
wherein the device for generating an air jet (24) comprises at least one nozzle (28) provided on the railing (20) upstream of the diverting device (14).

2. Apparatus according to claim 1, wherein the air flow causes a force on the objects (18) to be diverted in the direction of the railing (20).

3. Apparatus according to any one of the preceding claims, wherein the air jet is generated by a compressed air generator (22) and is aligned parallel to the railing (20) by means of a compressed air line (26) with the nozzle (28).

4. Apparatus according to any one of the preceding claims, wherein the air jet is parallel to the railing (20) and in the direction of transport of the objects (18).

5. Apparatus according to any one of the preceding claims, wherein the railing (20) comprises a hollow profile through which the air jet (24) is directed, and wherein the railing (20) comprises at least one opening (30) through which the air jet (24) exits substantially parallel to the railing (20).

6. Apparatus according to any one of the preceding claims, wherein the air jet (24) is parallel to the railing (20) and at a predetermined angle (β) with respect to the transport plane defined by the transport devices (12, 16).

7. Apparatus according to any one of claims 1 to 5, wherein the second transport device (16) extends substantially parallel to the first transport device (12) in the upstream conveying direction and deviates from the first transport device (12) at an optionally adjustable angle (α) in the region of the diverting device (14).

8. Apparatus according to any one of the preceding claims, wherein the diverting device (14) comprises a series of diverting segments (14a), and wherein the individual diverting segments (14a) together form a continuous diverting surface.

9. Method for diverting objects (18), such as containers, bundles, packages, which are conveyed on a transport device,
with a first transport device (12) on which the objects (18) are transported in a single row,
a second transport device (16) which is arranged laterally of the first transport device (12)
with a diverting device (14) which is provided on one side of the transport device and by means of which an object (18) to be diverted is diverted from the first transport device (12) onto the second transport device (16),
with a railing (20) which is provided on the side of the transport device opposite the diverting device,
**characterised in that**
a device for generating an air jet (24) is provided, wherein the device for generating the air jet is configured such that the generated air jet (24) runs parallel to the railing (20) and is blown along the inner side of the railing (20), and
wherein the device for generating an air jet (24) comprises at least one nozzle (28) provided on the railing (20) upstream of the diverting device (14).

## Revendications

1. Appareil permettant de faire dévier des objets (18), tels que contenants, conditionnements, paquets, qui sont acheminés sur un appareil de transport, comprenant
un premier dispositif de transport (12), sur lequel les objets (18) sont transportés en une seule rangée,
un second dispositif de transport (16), qui est agencé sur le côté du premier dispositif de transport (12),
un dispositif de déviation (14), qui est prévu sur un côté de l'appareil de transport et à l'aide duquel un objet (18) destiné à être dévié est dévié à partir du premier dispositif de transport (12) vers le second dispositif de transport (16), et
un rail (20), qui est prévu sur un côté de l'appareil de transport situé à l'opposé du dispositif de déviation,
**caractérisé par**
un dispositif pour générer un jet d'air (24), le dispositif pour générer le jet d'air étant configuré de telle sorte que le jet d'air généré (24) circule parallèlement au rail (20) et est soufflé le long de la face intérieure du rail (20), et le dispositif pour générer un jet d'air (24) ayant au moins une buse (28) qui est prévue sur le rail (20) en amont du dispositif de déviation (14).

2. Appareil selon la revendication 1, dans lequel le flux d'air sur les objets (18) destinés à être déviés produit une force dans le sens du rail (20).

3. Appareil selon l'une des revendications précédentes, dans lequel le jet d'air est généré par un générateur d'air comprimé (22) et est aligné parallèlement au rail (20) via une ligne d'air comprimé (26) avec la buse (28).

4. Appareil selon l'une des revendications précédentes, dans lequel le jet d'air circule parallèlement au rail (20) et dans le sens de transport des objets (18).

5. Appareil selon l'une des revendications précédentes, dans lequel le rail (20) a un profil creux, à travers lequel le jet d'air (24) est conduit, et dans lequel le rail (20) possède au moins une ouverture (30), à travers laquelle le jet d'air (24) sort substantiellement en parallèle au rail (24).

6. Appareil selon l'une des revendications précédentes, dans lequel le jet d'air (24) circule parallèlement au rail (20) et suivant un angle prédéfini (β) relativement au plan de transport défini par les dispositifs de transport (12, 16).

7. Appareil selon l'une des revendications 1 à 5, dans lequel le second dispositif de transport (16) fonctionne substantiellement en parallèle au premier dispositif de transport (12) en amont dans le sens de convoyage et dévie du premier dispositif de transport (12) suivant un angle facultativement ajustable (α) dans la zone de l'appareil de déviation (14).

8. Appareil selon l'une des revendications précédentes, dans lequel le dispositif de déviation (14) comprend une rangée de segments de déviation (14a), et dans lequel les segments de déviation individuels (14a) forment ensemble une surface de déflexion continue.

9. Procédé servant à faire dévier des objets (18), tels que contenants, conditionnements, paquets, qui sont acheminés sur un appareil de transport, comprenant
un premier dispositif de transport (12), sur lequel les objets (18) sont transportés en une seule rangée,
un second dispositif de transport (16), qui est agencé sur le côté du premier dispositif de transport (12),
un dispositif de déviation (14), qui est prévu sur un côté de l'appareil de transport et à l'aide duquel un objet (18) destiné à être dévié est dévié à partir du premier dispositif de transport (12) vers le second dispositif de transport (16),
un rail (20), qui est prévu sur le côté de l'appareil de transport situé à l'opposé du dispositif de déviation,
**caractérisé en ce que**
un dispositif pour générer un jet d'air (24) est prévu, le dispositif pour générer le jet d'air étant configuré de telle sorte que le jet d'air généré (24) circule parallèlement au rail (20) et est soufflé le long de la face intérieure du rail (20), et le dispositif pour générer un jet d'air (24) ayant au moins une buse (28) qui est prévue sur le rail (20) en amont du dispositif de déviation (14).
